# EUROPEAN PATENT SPECIFICATION

(11) **EP 3 590 730 B1**
(45) Date of publication and mention of the grant of the patent: **31.03.2021**
(21) Application number: 19183223.7
(22) Date of filing: 28.06.2019
(51) Int. Cl.: B60C 11/02, B60C 19/00

(54) **ANNULAR LOW FRICTION TIRE SLEEVE**
RINGFÖRMIGER REIFENÜBERZUG MIT GERINGEM REIBWERT
COUVERTURE DE PNEU À FAIBLE FROTTEMENT EN FORME D'ANNEAU

(30) Priority: 03.07.2018 US 201816026458
(43) Date of publication of application: 08.01.2020
(73) Proprietor: Herbert, Douglas Merrill, Concord, NC 28027 (US)
(72) Inventor: Herbert, Douglas Merrill, Concord, NC 28027 (US)
(74) Representative: Peterreins Schley

(56) References cited:
- WO-A1-2006/018566
- WO-A1-2008/093242
- CA-A1- 2 013 777
- FR-A1- 2 936 208

## Description

### Technical Field and Background of the Invention

This invention relates to an annular tire sleeve that is installed over a traditional vehicle tire. Once the sleeve is in place, the tread surface of the sleeve makes contact with the road instead of the traditional vehicle tire tread surface. The tread surface of the sleeve is designed such that it encourages skidding at low speeds. This is useful for training drivers to control a vehicle that has entered a skid.

When a vehicle is skidding, at least one tire no longer has traction on the road surface. The ability to understand how to respond in these situations can mitigate or even prevent an accident. In order to conduct skid training in a controlled situation, the coefficient of friction between the tire and the road must be low enough to allow the tires to "break loose" or go into a skid at low vehicle speeds.

Two methodologies exist for achieving this loss of traction at low speeds. The first is a low friction surface, such as a wet surface. Installing and maintaining a low friction surface can be costly and training would be limited to the location of the low friction surface. The second is a specialty tire with a low friction tread. Replacing all of the tires on a vehicle with these specialty tires is costly. Additionally, the tread surface of these tires is such that wear and tear causes the need to frequently replace the tires which adds even more cost.

A more recent attempt to create a low friction tread on a tire involves sliding an annular sleeve onto a traditional tire. The cost of sleeves is much less than the cost of an entire tire with a specialty tread. These sleeves also reduce the cost of having to buy entire tires each time the low-friction tread wears. WO 2006/018566 shows an annular sleeve of this design having a tubular body with a convex profile that slides onto a traditional tire. Minimal friction between the sleeve and the tire can potentially cause the sleeve to slide off of the tire during a skid. This document is showing the features of the preamble of claim 1.

WO 2008/093242 discloses a sleeve that has 'teeth' on the inside for providing a better grip between the tire and the sleeve. However these 'teeth' are designed such that they have a steep side and a shallow side which enables the sleeve to slide onto the tire, but does not provide optimal gripping of the tire by the 'teeth' in all directions while skidding. Installation of this prior art sleeve onto the tire can also prove problematic. In one disclosed design the sleeve has a flange on both sides which creates a smaller opening to slide around a tire. Another disclosed design has a point at the end that can get caught inward while sliding the sleeve around the tire.

Further sleeves to be installed on tires are known from CA 2,013,777 A1 and from FR 2 936 208 A1.

### Summary of the Invention

It is therefore an object of the present invention to provide a tire sleeve that permits drivers to be trained to anticipate and avoid or correct skids while driving a vehicle, wherein the tire sleeve provides inherent slow friction, skid-inducing properties.

This object is achieved by a tire sleeve as defined in claim 1. Advantageous features of the present invention are defined in the dependent claims.

According to the present invention, the sleeve thickness is graduated from a relatively thicker inside edge of the sleeve to a relatively thinner outside edge of the sleeve. Inside and outside directions are defined in relation to the vehicle when the tire is installed; outside facing away from the vehicle and inside facing toward the vehicle. Said in other words, the width between the interior surface and the exterior surface of the sleeve increases from the outside to the inside of the tire along the axial direction. This creates positive camber and aids in reducing traction to encourage skidding at low speeds.

### Brief Description of the Drawing Figures

The present invention is best understood when the following detailed description of the invention is read with reference to the accompanying drawings, in which:
- Figure 1: is a perspective view of the annular tire sleeve installed on a vehicle tire,
- Figure 2: is an exploded perspective view of the sleeve and tire shown in Figure 1,
- Figure 3: is a perspective view of the annular tire sleeve,
- Figure 4: is a cross section view of the annular tire sleeve,
- Figure 5: is an enlarged partial cross section view of the sleeve shown in Figure 4,
- Figure 5A: is an enlarged partial cross section view of a single stud shown in Figure 5,
- Figure 5B: is an enlarged partial cross section view of an edge of the sleeve shown in Figure 5, and
- Figure 6: is a cross section view of the annular tire sleeve installed on a vehicle tire.

### Detailed Description of the Preferred Embodiment

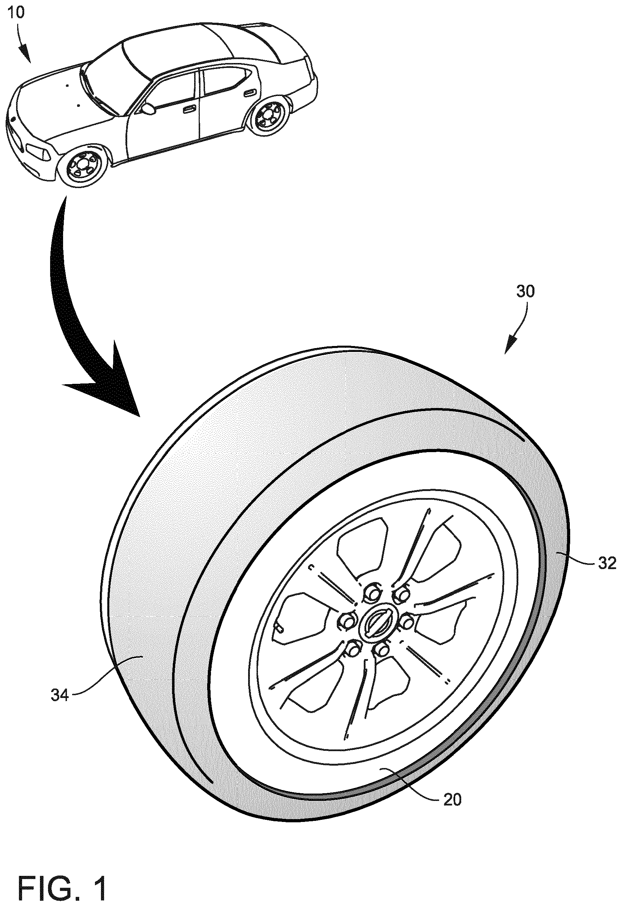

Referring now to the drawings, Figure 1 shows an annular tire sleeve 30 installed on a tire 20 of a vehicle 10. When the sleeve 30 is installed, contact with the road is made by an exterior surface of the sleeve 34 instead of the tire 20. The sleeve 30 is made of a low friction, long wearing material such as Nylon 6. A low coefficient of friction enables the exterior surface 34 to lose traction with the road at lower vehicle speeds than traditional treaded tires. Once at least one tire 20 has lost traction, or "broken loose", the vehicle 10 is considered to have entered a skid. While in a skid, the tire 20 is traveling in a direction traverse to the direction of travel. The ability to enter a skid at a low speed is beneficial for training drivers how to safely respond to these situations.

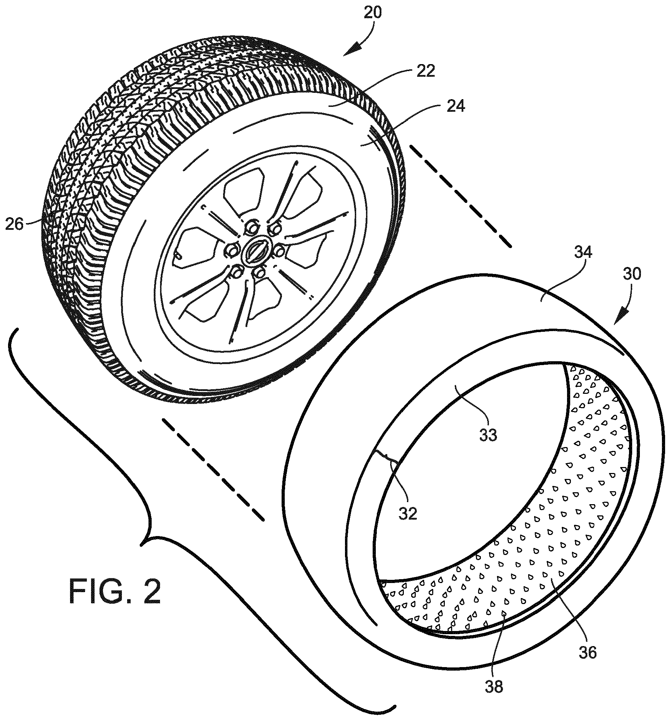

As shown in Figure 2, the sleeve 30 is installed from an outside of the tire 20 until a flange 32 conforms to a shoulder of the tire 22 and an interior surface of the sleeve 36 is in contact with a tread surface of the tire 26. Once the sleeve 30 is installed, the exterior surface of the flange 33 is flat and parallel to the shoulder of the tire 24. In addition to guiding installation of the sleeve 30 the flange 32 also serves to prevent the sleeve 30 from shifting in an axial direction towards the vehicle. Inside and outside directions are defined in relation to the vehicle 10 when the tire 20 is installed; outside facing away from the vehicle 10 and inside facing toward the vehicle.

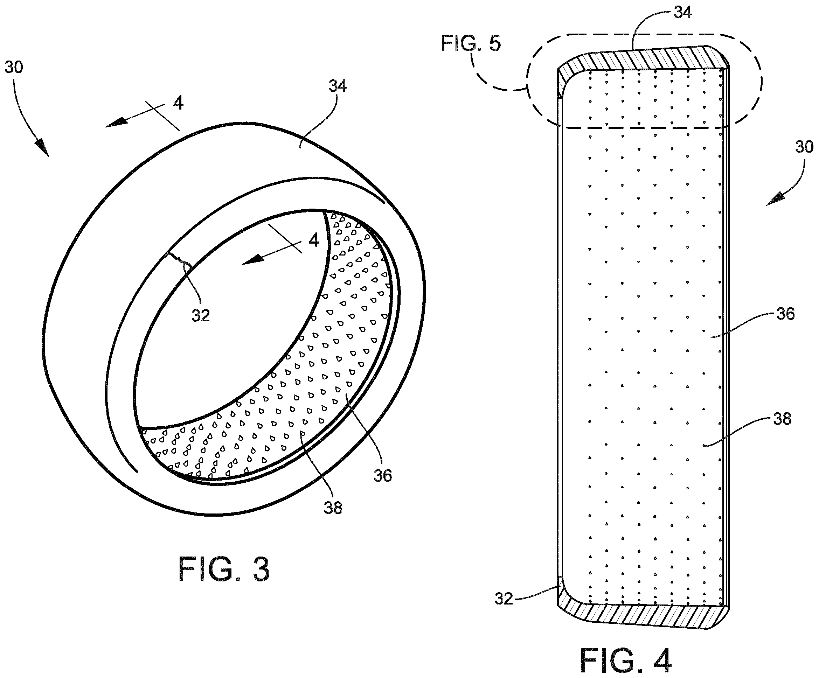

Figures 2, 3, and 4 show an array of studs 38 located on the interior surface 36 that engage the tread surface of the tire 26 and secure the sleeve 30 to the tire 20. The studs 38 have a conical shape and are arranged in an array having at least four axial rows of twenty studs 38 on the interior surface of the sleeve 36. Preferably there are nine evenly spaced axial rows having thirty-nine evenly spaced studs 38 per row with alternating rows staggered half the distance between studs 38 on each row.

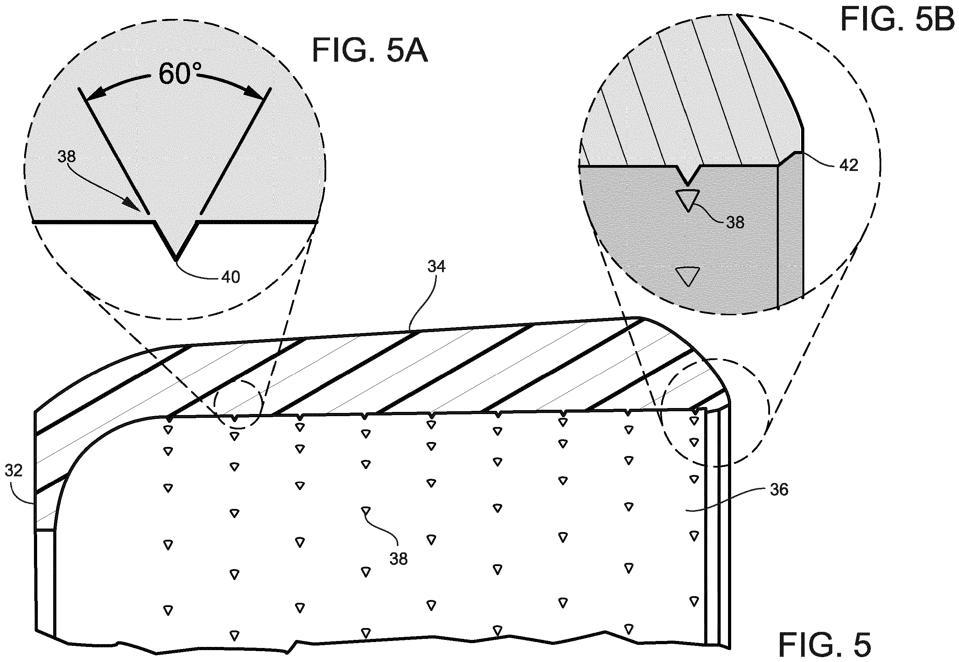

As shown in Figure 5A, the studs have a point extending from the interior surface 36. The angle of the cross section is preferably 60°. This conical shape enables each stud 38 to maintain a grip on the tire tread 26 in all directions once the sleeve 30 is installed. Maintaining a multidirectional grip on the tire 20 reduces the risk of the sleeve 30 slipping in either an axial or radial direction during use.

As shown in Figure 5B, the sleeve 30 has a bullnose inside edge 42. The bullnose shape of the inside edge 42 is beneficial for installation of the sleeve 30 onto the tire 20. When the sleeve 30 is installed, the bullnose shape enables the sleeve 30 to be drawn onto the tire 20 without any inward bending or damage to the inside edge 42.

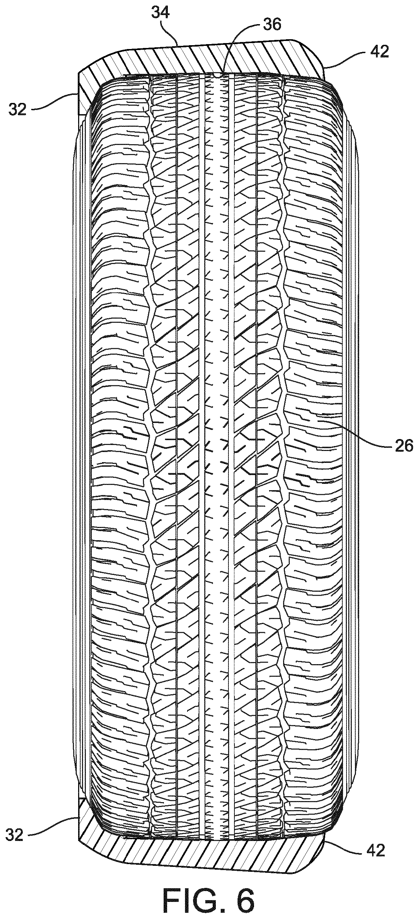

As shown in Figure 6 the width between the interior surface 36 and the exterior surface 34 of the sleeve 30 increases from the outside to the inside of the tire 30 along the axial direction. This creates positive camber and aids in reducing traction to encourage skidding at low speeds. In addition to creating positive camber, the graduated thickness of the sleeve width also assists in manufacturing by making the sleeve easier to remove from the mold. The inside and outside ends of the sleeve 30 are also curved toward the tire 20 forming an acute angle with the road to minimize any catching of the sleeve 30 during a skid.

An annular tire sleeve according to the invention has been described with reference to specific embodiments and examples. Various details of the invention may be changed without departing from the scope of the invention. Furthermore, the foregoing description of the preferred embodiments of the invention and best mode for practicing the invention are provided for the purpose of illustration only and not for the purpose of limitation, the invention being defined by the claims.

## Claims

1. An annular tire sleeve (30) for being installed onto a tire (20) for skid avoidance training, comprising:
a low friction tread formed on an exterior surface (34) of the sleeve for contacting a road surface;
an interior surface (36) of the sleeve having an array of studs (38) projecting outwardly from the interior surface (36) of the sleeve for engaging and securing the sleeve to the tire; and
an integrally formed flange (32) extending radially inward from an outside edge of the sleeve for maintaining the sleeve on an outside shoulder of the tire during a skid;
**characterized in that** the sleeve thickness is graduated from a relatively thicker inside edge of the sleeve to a relatively thinner outside edge of the sleeve, wherein inside and outside directions are defined in relation to the vehicle (10) when the tire (20) is installed, outside facing away from the vehicle (10) and inside facing toward the vehicle (10).

2. An annular tire sleeve according to claim 1, wherein the sleeve (30) rests on the tread of the tire.

3. An annular tire sleeve according to claim 1 or 2, wherein the array of studs (38) is evenly spaced in at least four axial rows each having at least twenty studs per row.

4. An annular tire sleeve according to claim 3, wherein the rows are radially staggered.

5. An annular tire sleeve according to claim 1, wherein the array of studs (38) is evenly spaced in nine axial rows each having thirty-nine studs per row.

6. An annular tire sleeve according to claim 3, wherein the rows are radially staggered by half a distance between the studs on the row.

7. An annular tire sleeve according to one of the preceding claims, wherein the studs (38) form a geometric cone terminating at a point (40).

8. An annular tire sleeve according to one of the preceding claims, wherein the interior surface of the flange is curved to conform to the curve of a shoulder of the tire and the exterior surface of the flange is flat and parallel with respect to an outside wall of the tire.

9. An annular tire sleeve according to one of the preceding claims, wherein an inside edge of the sleeve forms a bullnose for installing the sleeve onto the tire.

10. A tire (20) of a vehicle (10), **characterized in that** an annular tire sleeve (30) according to one of the preceding claims is installed on the tire.

## Patentansprüche

1. Ringförmiger Reifenüberzug (30) zur Montage auf einem Reifen (20) für Schleudervermeidungstraining, umfassend:
eine reibungsarme Lauffläche, die auf einer Außenoberfläche (34) des Überzugs zum Berühren einer Straßenoberfläche ausgebildet ist;
eine Innenoberfläche (36) des Überzugs, die eine Anordnung von Noppen (38) aufweist, die von der Innenoberfläche (36) des Überzugs nach außen vorstehen, um mit dem Überzug in den Reifen einzugreifen und diesen daran zu fixieren; und
einen integral ausgebildeten Flansch (32), der sich von einer Außenkante des Überzugs radial nach innen erstreckt, um den Überzug während des Schleuderns auf einer Außenschulter des Reifens zu halten;
**dadurch gekennzeichnet, dass** die Überzugstärke von einer relativ dickeren Innenkante des Überzugs zu einer relativ dünneren Außenkante des Überzugs übergeht, wobei die Richtung zur Innenseite und zur Außenseite in Bezug zum Fahrzeug (10) definiert sind, wenn der Reifen (20) montiert ist, wobei die Außenseite vom Fahrzeug (10) abgewandt ist und die Innenseite dem Fahrzeug (10) zugewandt ist.

2. Ringförmiger Reifenüberzug nach Anspruch 1, wobei der Überzug (30) auf der Lauffläche des Reifens aufliegt.

3. Ringförmiger Reifenüberzug nach Anspruch 1 oder 2, wobei die Anordnung von Noppen (38) in mindestens vier axialen Reihen, die jeweils mindestens zwanzig Noppen pro Reihe aufweisen, gleichmäßig beabstandet ist.

4. Ringförmiger Reifenüberzug nach Anspruch 3, wobei die Reihen radial versetzt sind.

5. Ringförmiger Reifenüberzug nach Anspruch 1, wobei die Anordnung von Noppen (38) in neun axialen Reihen, die jeweils neununddreißig Noppen pro Reihe aufweisen, gleichmäßig beabstandet ist.

6. Ringförmiger Reifenüberzug nach Anspruch 3, wobei die Reihen um die Hälfte des Abstands zwischen den Noppen in der Reihe radial versetzt sind.

7. Ringförmiger Reifenüberzug nach einem der vorstehenden Ansprüche, wobei die Noppen (38) einen geometrischen Kegel ausbilden, der in einer Spitze (40) endet.

8. Ringförmiger Reifenüberzug nach einem der vorstehenden Ansprüche, wobei die Innenoberfläche des Flanschs gekrümmt ist, um zur Krümmung einer Schulter des Reifens zu passen, und wobei die Außenoberfläche des Flanschs eben und in Bezug zu einer Außenwand des Reifens parallel ist.

9. Ringförmiger Reifenüberzug nach einem der vorstehenden Ansprüche, wobei eine Innenkante des Überzugs eine abgerundete Kante zur Montage des Überzugs auf dem Reifen ausbildet.

10. Reifen (20) eines Fahrzeugs (10), **dadurch gekennzeichnet, dass** ein ringförmiger Reifenüberzug (30) nach einem der vorstehenden Ansprüche auf dem Reifen montiert ist.

## Revendications

1. Manchon annulaire (30) pour pneu destiné à être installé sur un pneu (20) dans le cadre d'une formation aux techniques antidérapage, comprenant:
une bande de roulement à faible frottement formée sur une surface extérieure (34) du manchon, destinée à venir au contact d'une surface routière;
une surface intérieure (36) du manchon présentant un réseau de crampons (38) faisant saillie vers l'extérieur depuis la surface intérieure (36) du manchon, destinés à venir en prise avec le manchon et à l'assujettir au pneu; et
une collerette (32) intégralement formée s'étendant radialement vers l'intérieur depuis un bord extérieur du manchon, destinée à maintenir le manchon sur un épaulement extérieur du pneu au cours d'un dérapage;
**caractérisé en ce que** l'épaisseur du manchon varie progressivement entre un bord intérieur relativement plus épais du manchon et un bord extérieur relativement plus mince du manchon, les directions intérieure et extérieure étant définies par rapport au véhicule (10) lorsque le pneu (20) est installé, la direction extérieure étant orientée à l'opposé du véhicule (10) et la direction intérieure étant orientée vers le véhicule (10).

2. Manchon annulaire pour pneu selon la revendication 1, dans lequel le manchon (30) repose sur la bande de roulement du pneu.

3. Manchon annulaire pour pneu selon la revendication 1 ou 2, dans lequel le réseau de crampons (38) est espacé de manière régulière sur au moins quatre rangées axiales comportant chacune au moins vingt crampons par rangée.

4. Manchon annulaire pour pneu selon la revendication 3, dans lequel les rangées sont décalées radialement.

5. Manchon annulaire pour pneu selon la revendication 1, dans lequel le réseau de crampons (38) est espacé de manière régulière sur neuf rangées axiales comportant chacune trente-neuf crampons par rangée.

6. Manchon annulaire pour pneu selon la revendication 3, dans lequel les rangées sont décalées radialement de la moitié d'une distance entre les crampons dans la rangée.

7. Manchon annulaire pour pneu selon l'une des revendications précédentes, dans lequel les crampons (38) forment un cône géométrique se terminant en un point (40).

8. Manchon annulaire pour pneu selon l'une des revendications précédentes, dans lequel la surface intérieure de la collerette est incurvée de manière à épouser la courbe d'un épaulement du pneu et la surface extérieure de la collerette est plate et parallèle à une paroi extérieure du pneu.

9. Manchon annulaire pour pneu selon l'une des revendications précédentes, dans lequel un bord extérieur du manchon forme un arrondi permettant l'installation du manchon sur le pneu.

10. Pneu (20) d'un véhicule (10), **caractérisé en ce qu'**un manchon annulaire (30) pour pneu selon l'une des revendications précédentes est installé sur le pneu.
